# EUROPEAN PATENT APPLICATION

(11) **EP 4 707 640 A1**
(43) Date of publication of application: **11.03.2026**
(21) Application number: 24808252.1
(22) Date of filing: 02.08.2024
(51) Int. Cl.: F16H 49/00

(54) **NEW HARMONIC REDUCER, FLEXSPLINE ASSEMBLY AND ROBOT**

(30) Priority: 18.07.2024 CN 202410967821
(71) Applicant: Shenzhen Tongchuan Technology Co., Ltd., Shenzhen, Guangdong 518100 (CN)
(72) Inventor: SHEN, Xiaolong, Shenzhen, Guangdong 518100 (CN); CHEN, Xianwei, Shenzhen, Guangdong 518100 (CN)
(74) Representative: Balder IP Law, S.L.
(86) International application number: PCT/CN2024/109587
(87) International publication number: WO 2026/016225

(57) **Abstract**

The present application relates to a novel harmonic reducer, a flexible gear assembly, and a robot. The harmonic reducer device includes a rigid gear, a flexible gear, a wave generator, and a torque transmission member. The wave generator is positioned within the rigid gear, and the flexible gear is placed between the rigid gear and the wave generator, such that the flexible gear is deformed by the protrusions of the wave generator, such that the external gear of the flexible gear, corresponding to the protrusions, is partially engaged with the internal gear of the rigid gear. The input connection portion of the torque transmission member is joined to the torque output portion of the flexible gear, while the output connection portion of the torque transmission member is connected to a fixed connector to transmit torque. The deformable elastic portion of the torque transmission member is designed to deform simultaneously with the flexible gear.

## Description

### TECHNICAL FIELD

The present application relates to the technical field of harmonic reducers, and more particularly, to a novel harmonic reducer.

### BACKGROUND ART

At present, a conventional harmonic reducer is composed of a rigid gear, a flexible gear, and a wave generator configured to radially deform the flexible gear. As the wave generator rotates, the flexible gear undergoes a controllable elastic deformation, causing a staggered engagement of teeth between the rigid gear and the flexible gear, allowing torque transmission. A conventional flexible gear includes a thin-walled cylinder with openings at two ends, and a flange vertically arranged at one end of the thin-walled cylinder. The flexible gear may be classified into a hat-shaped flexible gear or a cup-shaped flexible gear according to whether the flange is arranged at the outer side or the inner side of the thin-walled cylinder. A same problem exists in both the hat-shaped flexible gear and the cup-shaped flexible gear, namely, when the wave generator rotates to deform the flexible gear, the end of the flexible gear away from the flange deforms while the end of the flexible gear with the flange is less likely to deform radially or only slightly deform radially due to the rigidity of the flange, because the flange is less likely to deform than the thin-walled cylinder, so that the cylindrical section of the flexible gear is cone-shaped, which causes that it is difficult for the flexible gear teeth to be engaged with the rigid gear teeth over a full tooth length. Therefore, the torque value that may be transmitted by a conventional reducer is only 40% to 60% of that when full teeth are in engagement. In order to not affect the conventional use and safety of a harmonic reducer (in order to achieve a torque output and improve the fatigue life of a flexible gear, an existing conventional flexible gear usually must have a long axial length, taking a hat-shaped harmonic reducer of a conventional model 17-50 in the market as an example, the length of a flexible gear is about 60% larger than the thickness of a gear portion of the flexible gear, a gear portion of a rigid gear and a wave generator bearing), the existing solution is that the axial length of the flexible gear needs to be made longer than the gear portion, the axial dimension of the wave generator and the rigid gear, which causes the harmonic reducer to be longer axially as a whole, so that the axial dimension of the harmonic reducer as a whole becomes larger and the transmission rigidity becomes worse. In view of this problem, the flange is configured as an integrated thin-walled elastic structure in the existing art, but in practical production and processing, the processing technology of such flexible gears is difficult and the yield is low, which results in difficulty in mass production.

According to the related art mentioned above, the existing harmonic reducer has the defects of large axial dimension and poor driving torque.

### SUMMARY

The present application provides a novel harmonic reducer to overcome the defects of a large axial dimension and a poor driving torque of an existing harmonic reducer.

In order to solve the above-mentioned technical problem, the present application provides a novel harmonic reducer including four components, namely a rigid gear, a flexible gear, a wave generator and a torque transmission member, specifically:
the rigid gear features an annular internal gear along an inner circumferential surface of the rigid gear,
the wave generator includes a cam with N protrusions rotatable around an axis and a flexible bearing configured to be joined with an outer peripheral surface of the cam, a rolling element of the flexible bearing is designed as a ball, a quill roller or a pin roller, the N of the N protrusions is an integer ≥ 2, and the wave generator is inserted in the rigid gear,
the flexible gear has an annular external gear along an outer peripheral surface of the flexible gear, a number of teeth of the annular external gear is less than a number of teeth of the annular internal gear, the flexible gear has a torque output portion adjacent to the annular external gear in an axial direction, the flexible gear is inserted between the rigid gear and the wave generator, an inner circumference of the flexible gear is deformed in cooperation with an outer periphery of the wave generator such that the external gear of the flexible gear is partially engaged with the internal gear of the rigid gear, and

The torque transmission member extends circumferentially along either the inner or outer circumference of the torque output portion. It includes an input connection portion, a deformable elastic portion and an output connection portion. The input connection portion is joined with an outer peripheral surface or an inner circumferential surface of the torque output portion to receive a torque, while the output connection portion is configured to be connected with a fixed connector to transmit the torque.

By incorporating the torque transmission member in this design, the flexible gear is separated from the torque transmission member, allowing torque to be transmitted outward through the latter. The deformable elastic portion of the torque transmission member enhances the flexibility of the flexible gear during torque transmission. This improves the engagement length between the annular internal and external gears, allowing nearly full tooth engagement, which increases the durability and safety of the torque transmission. As a result, the service life of the harmonic reducer is extended.

When the flexible gear is subjected to deformation by the current conventional harmonic reducer, one end of the flexible gear, which engages with the rigid gear, undergoes slight deformation, while region near the flange is remains relatively rigid. As a result, the axial cross-section of the flexible gear in the conventional harmonic reducer deforms into a conical shape. This deformation increases the loss of the flexible gear, particularly when a roller bearing is used in the wave generator of the conventional harmonic reducer. In contrast, the novel harmonic reducer described in the present application separates the flexible gear from the torque transmission member, ensuring that the deformation at both ends of the flexible gear is more uniform during elastic deformation. In addition, by incorporating a quill bearing or a pin roller bearing, the supporting effect on the flexible gear is enhanced, deformation-induced losses and ultimately extending the service life of the flexible gear.

Preferably, the torque output portion of the flexible gear is connected to the input connection portion of the torque transmission member in a manner including, but not limited to, welding, stickup, interference fit, splined connection, pressure contact, and/or insertion molding.

Preferably, the welding includes, but is not limited to, laser welding, friction welding, resistance welding, electromagnetic induction welding, and brazing welding.

Preferably, the deformable elastic portion may have a cross-section including, but not limited to, a straight plate shape, a U-shape, an S-shape, a V-shape, an N-shape, a C-shape, and/or an O-shape,
at least one turn of the deformable elastic portion in an axial direction is provided; and/or
at least one layer of the cross-section of the deformable elastic portion in a radial direction is provided; and/or
the deformable elastic portion is either a single, continuous hoop or a complete hoop composed of multiple interconnected arcs arranged in the circumferential direction.

Using the aforementioned technical solution, the cross-section of the torque transmission member may be formed by a combination of the previously described shapes. Alternatively, multiple torque transmission members with identical cross-sections may be used in combination, arranged in multiple turns and layers, or a complete circular structure may be formed by several interconnected arcs in the circumferential direction.

Preferably, the torque transmission member may be made of, but not limited to, an alloy spring steel, a high-carbon spring steel, a stainless-steel spring steel, a copper alloy, an aluminum alloy, a carbon fiber material, and/or a resin material.

Preferably, the flexible bearing of the wave generator includes four main components, namely an outer ring, an inner ring, the rolling element and a retainer.

Preferably, the novel harmonic reducer further includes a bearing including the rigid gear, the fixed connector and the rolling element between the rigid gear and the fixed connector, or
the bearing includes a first collar, the rolling element and a second collar, the first collar is connected with the rigid gear, and the second collar is connected with the fixed connector.

The present application also provides a flexible gear assembly comprising two components: a flexible gear and a torque transmission member, where:
the flexible gear is designed to be positioned between a rigid gear and a wave generator. It features an external gear and is configured to undergo non-circular deformation by the wave generator, allowing partial engagement with the rigid gear.

The torque transmission member is attached either the outer peripheral wall or the inner circumferential wall of the flexible gear in a radial direction. A first edge of the torque transmission member is connected with the flexible gear to receive a torque, and a second edge of the torque transmission member is configured to be connected with a fixed connector to transmit the torque.

By adopting the above-mentioned technical solution, the torque transmission member can easily undergo radial deformation in conjunction with the flexible gear, and is configured to transmit the torque generated by the flexible gear, facilitated by the design of the deformable elastic portion.

Preferably, the torque transmission member is made from materials such as alloy spring steel, high-carbon spring steel, stainless-steel spring steel, copper alloy, carbon fiber, aluminum alloy, and/or resin materials, all of which exhibit elasticity. The torque transmission member is connected to the flexible gear through methods including welding, bonding, interference fit, press-fit, and/or insertion molding.

The present application also provides a robot incorporating the novel harmonic reducer described above.

The beneficial effects of the present application are: by separating the flexible gear and the torque transmission member in the novel harmonic reducer, the axial dimension of the flexible gear is minimized, leading to an overall reduction in the axial dimension and weight of the novel harmonic reducer, while maintaining the deformation safety and service life of the flexible gear in the novel harmonic reducer. Additionally, the design increases the effective engagement length of the flexible gear and the rigid gear, allowing for near full-tooth-length engagement, thereby improving the torque transmission capacity of the harmonic reducer.

### BRIEF DESCRIPTION OF THE DRAWINGS

In order to illustrate the technical solutions of the embodiments of the present application more clearly, the drawings used in the description of the embodiments will be briefly described, and it is obvious that the drawings in the following description are only some embodiments of the present application, and that other drawings may be obtained according to these drawings without involving any inventive effort for a person skilled in the art. Where
FIG. 1 is a schematic view showing the assembled structure of a conventional top hat-shaped harmonic reducer;
FIG. 2 is a schematic view showing the structure of a flexible gear and a rigid gear in the conventional top hat-shaped harmonic reducer in FIG. 1;
FIG. 3 is a schematic view showing the structure of the flexible gear of the conventional top hat-shaped harmonic reducer in FIG. 1 after elastic deformation;
FIG. 4 is a schematic view showing the assembled structure of a conventional cup-shaped harmonic reducer;
FIG. 5 is a schematic view showing the structure of a flexible gear and a rigid gear in the conventional cup-shaped harmonic reducer in FIG. 4;
FIG. 6 is a schematic view showing the structure of the flexible gear of the conventional cup-shaped harmonic reducer in FIG. 4 after elastic deformation;
FIG. 7 is a schematic view showing the assembled structure of a novel harmonic reducer according to an embodiment of the present application;
FIG. 8 is a schematic view showing a first bearing in a novel harmonic reducer according to an embodiment of the present application;
FIG. 9 is a schematic view showing a second bearing in a novel harmonic reducer according to an embodiment of the present application;
FIG. 10 is a schematic view showing the structure of a flexible gear of the novel harmonic reducer in FIG. 7;
FIG. 11 is a schematic view showing the structure of a torque transmission member of the novel harmonic reducer in FIG. 7;
FIG. 12 is a schematic view showing a radial state of a wave generator of the novel harmonic reducer in FIG. 7 when two protrusions are provided;
FIG. 13 is a schematic view showing a radial state of a wave generator of the novel harmonic reducer in FIG. 7 when three protrusions are provided;
FIG. 14 is a schematic view showing a radial state of a wave generator of the novel harmonic reducer in FIG. 7 when four protrusions are provided;
FIG. 15 is a sectional view showing the assembled structure of a conventional top hat-shaped harmonic reducer;
FIG. 16 is a schematic sectional view showing a novel harmonic reducer with a radial cross bearing, a torque transmission member with a U-shaped section, a flexible ball bearing and a torque transmission member outside the flexible gear according to an embodiment of the present application;
FIG. 17 is a sectional view showing a novel harmonic reducer with a radial cross bearing, a torque transmission member with a C-shaped section, a flexible ball bearing and a torque transmission member outside the flexible gear according to an embodiment of the present application;
FIG. 18 is a sectional view showing a novel harmonic reducer with a radial cross bearing, a torque transmission member with a C-shaped section, a flexible single-row roller bearing and a torque transmission member outside the flexible gear according to an embodiment of the present application;
FIG. 19 is a sectional view showing a novel harmonic reducer with a radial cross bearing, a torque transmission member with a C-shaped section, a flexible double-row roller bearing and a torque transmission member outside the flexible gear according to an embodiment of the present application;
FIG. 20 is a sectional view showing a novel harmonic reducer with an axial cross bearing, a torque transmission member with a C-shaped section, a flexible ball bearing and a torque transmission member outside the flexible gear according to an embodiment of the present application;
FIG. 21 is a sectional view showing a novel harmonic reducer with a radial cross bearing, a torque transmission member with an S-shaped section, a flexible ball bearing and a torque transmission member outside the flexible gear according to an embodiment of the present application;
FIG. 22 is a sectional view showing a novel harmonic reducer with a radial cross bearing, a torque transmission member with an S-shaped section, a flexible ball bearing and a torque transmission member inside the flexible gear according to an embodiment of the present application;
FIG. 23 is a sectional showing a torque transmission member with a C-shaped cross-section in the novel harmonic reducer and combined use methods according to an embodiment of the present application;
FIG. 24 is a sectional view showing a torque transmission member with a V-shaped section in a novel harmonic reducer and combined use methods according to an embodiment of the present application;
FIG. 25 is a sectional view showing a torque transmission member with an O-shaped section in a novel harmonic reducer according to an embodiment of the present application;
FIG. 26 is a sectional view showing a torque transmission member with a double V-shaped section in an axial direction in a novel harmonic reducer according to an embodiment of the present application;
FIG. 27 is a sectional view showing a torque transmission member with a U-shaped section in a novel harmonic reducer and a combined use method according to an embodiment of the present application;
FIG. 28 is a sectional view showing a torque transmission member with an S-shaped section in a novel harmonic reducer according to an embodiment of the present application;
FIG. 29 is a sectional view showing a section of a torque transmission member with an N-shaped section in a novel harmonic reducer according to an embodiment of the present application;
FIG. 30 is a sectional view showing a torque transmission member with a straight panel-shaped section in a novel harmonic reducer according to an embodiment of the present application;
FIG. 31 is a simulation diagram showing the engagement of a flexible gear and a rigid gear of a conventional harmonic reducer; and
FIG. 32 is a simulation diagram showing the engagement of a flexible gear and a rigid gear of a novel harmonic reducer according to an embodiment of the present application.

### DETAILED DESCRIPTION

The embodiments of the present application will now be described in greater detail with reference to the accompanying drawings, in which embodiments of the present application are illustrated. It should be understood that the embodiments described herein are merely examples and do not represent an exhaustive list of all possible embodiments of the present application. All other embodiments that can be derived from the disclosed embodiments by a person skilled in the art, without requiring inventive effort, are within the scope of protection of the present application.

It should be noted that, if a directional indication (such as up, down, left, right, front, rear, etc.) used in the embodiments of the present application are for explanatory purposes only. These directional references describe the relative positions and orientations of components as shown in the drawings. If the orientation of the components changes, the directional indications will change accordingly.

Furthermore, any references to "first", "second", and similar terms in the embodiments are for descriptive purposes only and should not be interpreted as implying any relative importance or indicating the number of features involved. Thus, features defining "first" and "second" described as "first" and "second" may each include one or more elements. Additionally, the technical solutions presented in various embodiments may be combined, provided that such combinations are feasible to a person skilled in the art. If a combination of technical solutions is found to be contradictory or impractical, it should be understood that such a combination does not exist and is not covered by the protection scope of the present application.

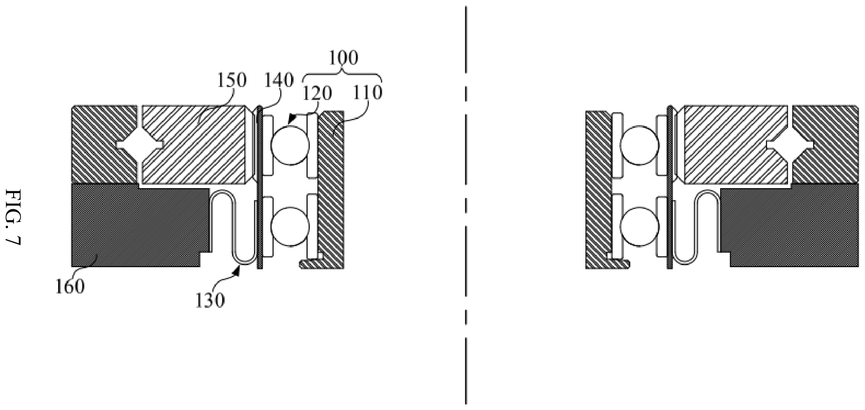

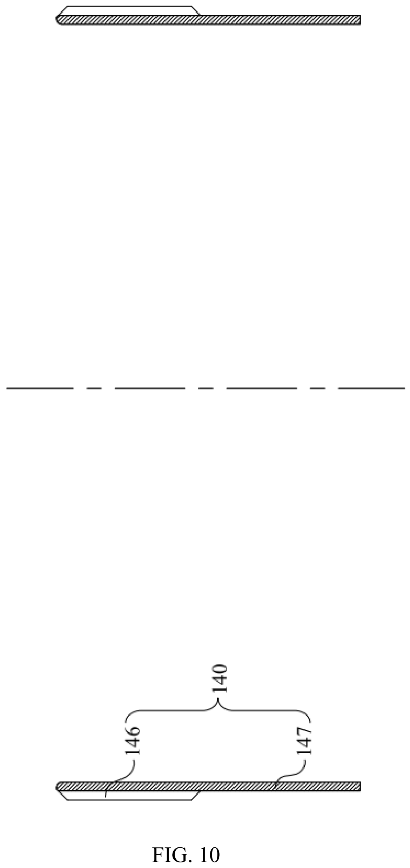

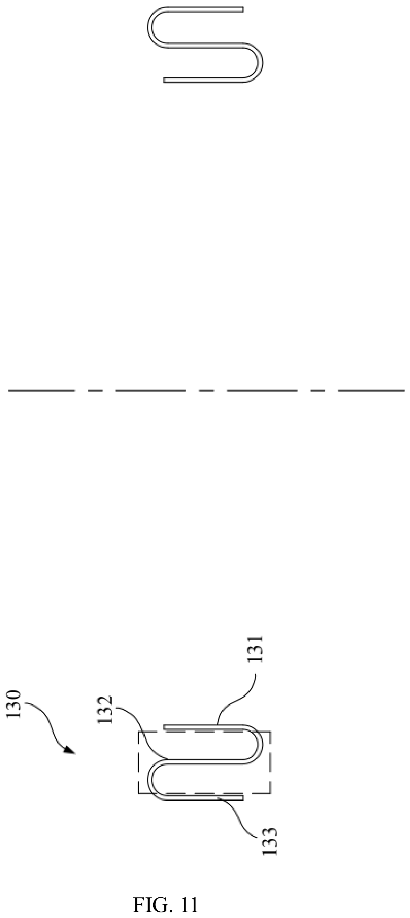

Referring to FIGS. 7-11, the present application provides a novel harmonic reducer, where referring to FIG. 7, the novel harmonic reducer includes four basic components of a rigid gear 150, a flexible gear 140, a wave generator 100 and a torque transmission member 130.

The rigid gear 150 has an annular internal gear 151 formed along an inner circumferential surface.

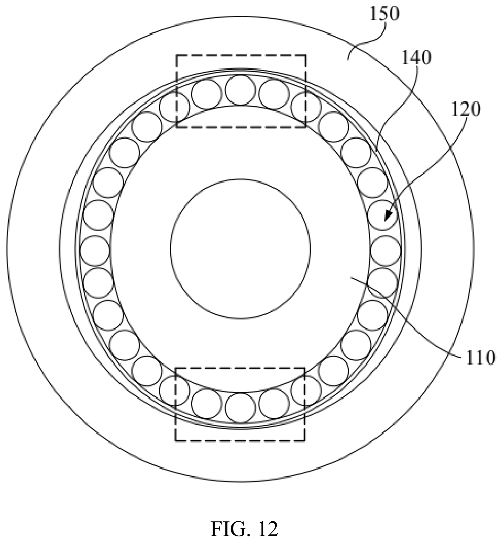

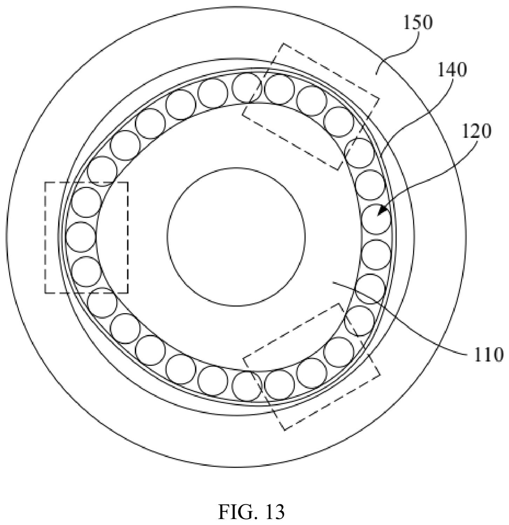

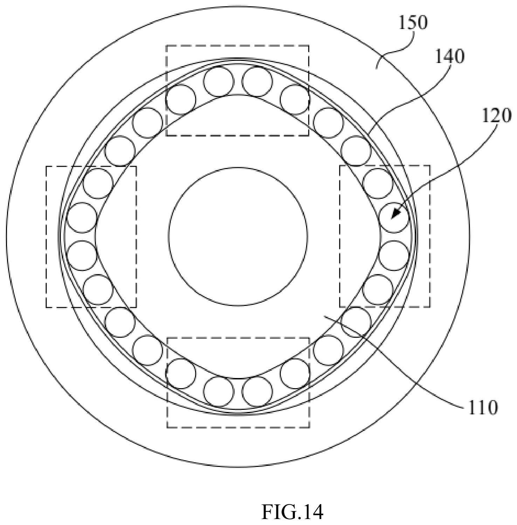

Referring to FIGS. 12, 13 and 14, the wave generator 100 includes a cam 110 with N protrusions, which are rotatable around an axis, and a flexible bearing 120, which is joined with an outer peripheral surface of the cam 110, the rolling element 121 of the flexible bearing 120 may be designed as a ball 122, a quill roller or a pin roller 123, N of the N protrusions is an integer ≥ 2. The wave generator 100 is inserted into the rigid gear 150.

The flexible gear 140 has an annular external gear 146 along an outer peripheral surface, the number of teeth of the annular external gear 146 is less than the number of teeth of the annular internal gear 151. The flexible gear 140 has a torque output portion 147 adjacent to the annular external gear 146 in an axial direction. The flexible gear 140 is inserted between the rigid gear 150 and the wave generator 100, and an inner circumference of the flexible gear 140 is deformed in cooperation with an outer periphery of the wave generator 100, such that an external gear of the flexible gear 140 is partially engaged with an internal gear of the rigid gear 150.

The torque transmission member 130 extends along a circumferential direction of an inner circumference or an outer periphery of the torque output portion 147 around the axis. The torque transmission member 130 includes an input connection portion 131, a deformable elastic portion 132 and an output connection portion 133, the input connection portion 131 is joined to an outer peripheral surface or an inner circumferential surface of the torque output portion 147 to receive a torque, and the output connection portion 133 is configured to be connected with a fixed connector 160 to transmit the torque.

By adopting the above-mentioned technical solution, the conventional structure of the flexible gear 140 is replaced with a flexible gear 140 and a torque transmission member 130 separated from each other through the torque transmission member 130, the torque of the flexible gear 140 is transmitted outwards through the torque transmission member 130, and the torque transmission member 130 is provided with the deformable elastic portion 132, such that the torque transmission member 130 is elastic. Compared with conventional harmonic reducers, this improves the flexibility of the flexible gear 140 during torque transmission, thereby increasing the effective engagement length between the annular internal gear 151 and the annular external gear 146 so that they may be engaged with each other for approximately full tooth length. This results in a longer service life and improved safety of torque transmission of the flexible gear 140.

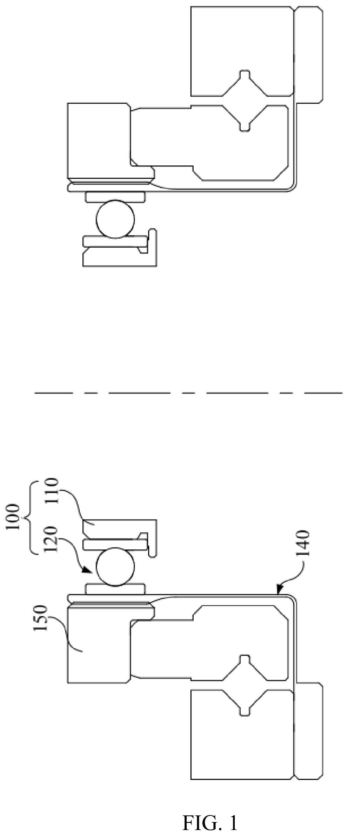

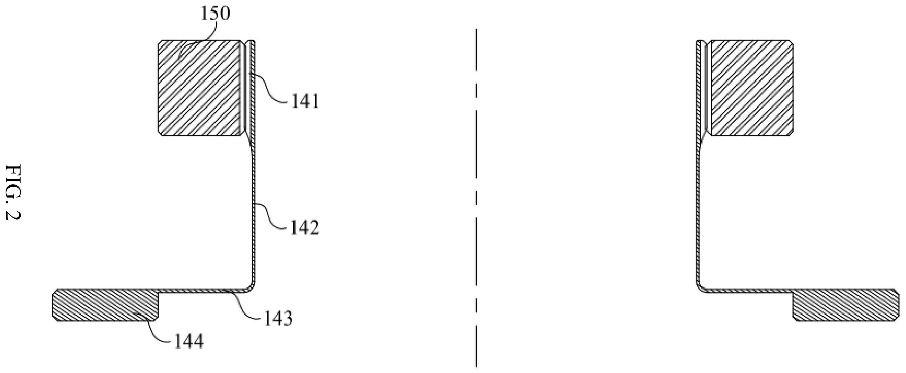

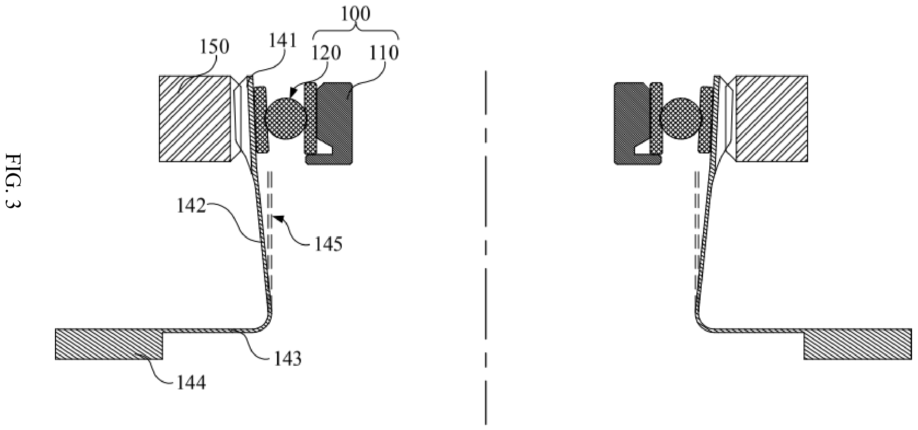

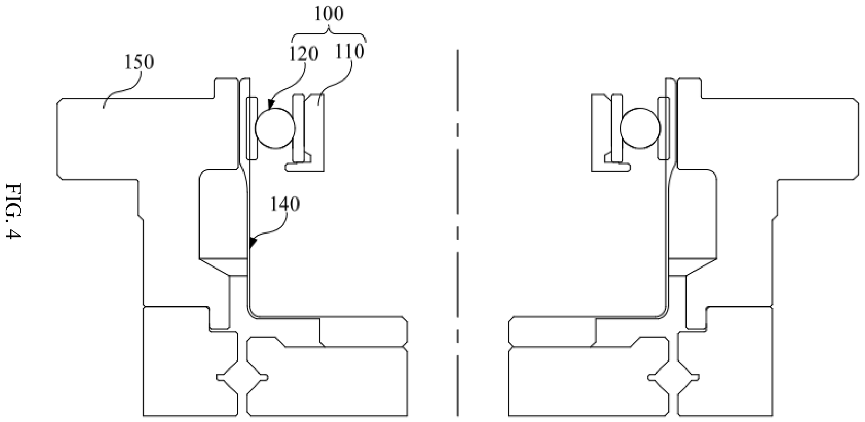

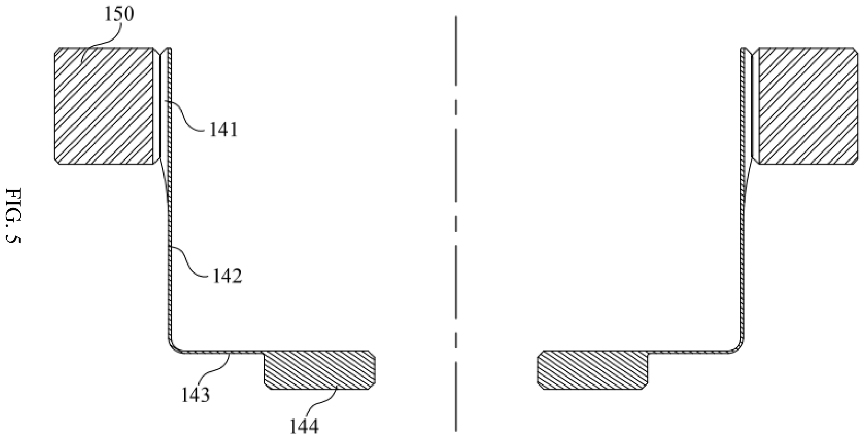

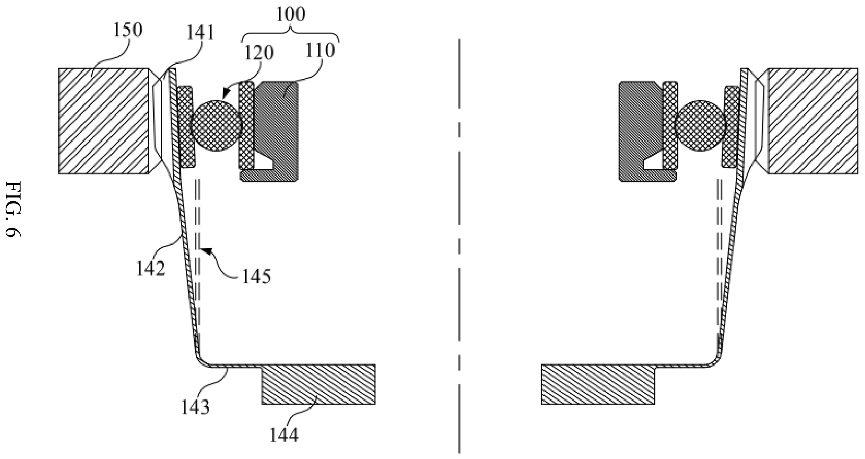

Referring to FIGS. 1-6, when the flexible gear 140 is deformed by the current conventional harmonic reducer, one end of the flexible gear 140 which is engaged with the rigid gear 150 is slightly deformed, and one side of the flexible gear 140 near the flange is not easily deformed, resulting in that the axial cross-section of the flexible gear 140 in the conventional harmonic reducer becomes deformed into a cone shape when the flexible gear 140 is deformed, so that loss of the flexible gear 140 will increase when a roller bearing 123 is used in the wave generator 100 of the conventional harmonic reducer. In contrast, in the novel harmonic reducer of the present application, the flexible gear 140 is separated from the torque transmission member 130, ensuring the deformation degree of two ends of the flexible gear 140 is more uniform when the flexible gear 140 is elastically deformed. Additionally, by using a quill bearing or a pin roller bearing 123, the supporting effect of the flexible bearing 120 on the flexible gear 140 is improved. This reduces the loss of the flexible gear 140 during elastic deformation, thereby prolonging its service.

Referring to FIGS. 1 to 6, in the conventional hat-shaped harmonic reducer and the conventional cup-shaped harmonic reducer, the flexible gear 140 includes an external tooth portion 141 engaged with the rigid gear 150, a flexible gear wall portion 142, a thin-walled flange 143, and a fixed flange 144.

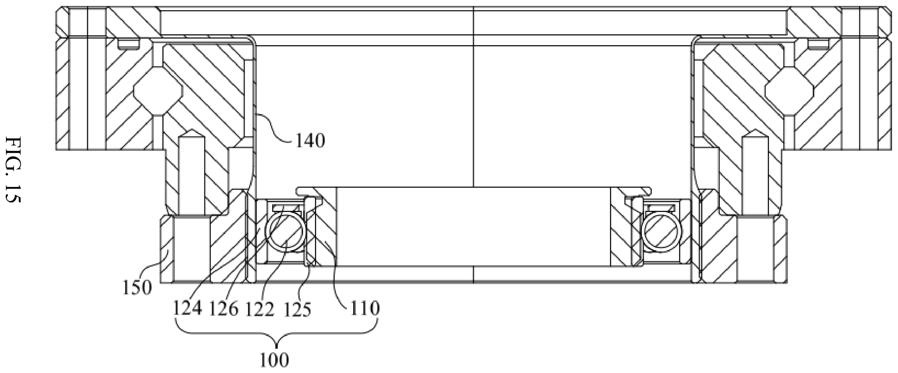

Referring to FIG. 15, a schematic view showing the cross-section of a conventional top hat-shaped harmonic reducer that is currently on the market is shown in FIG. 15.

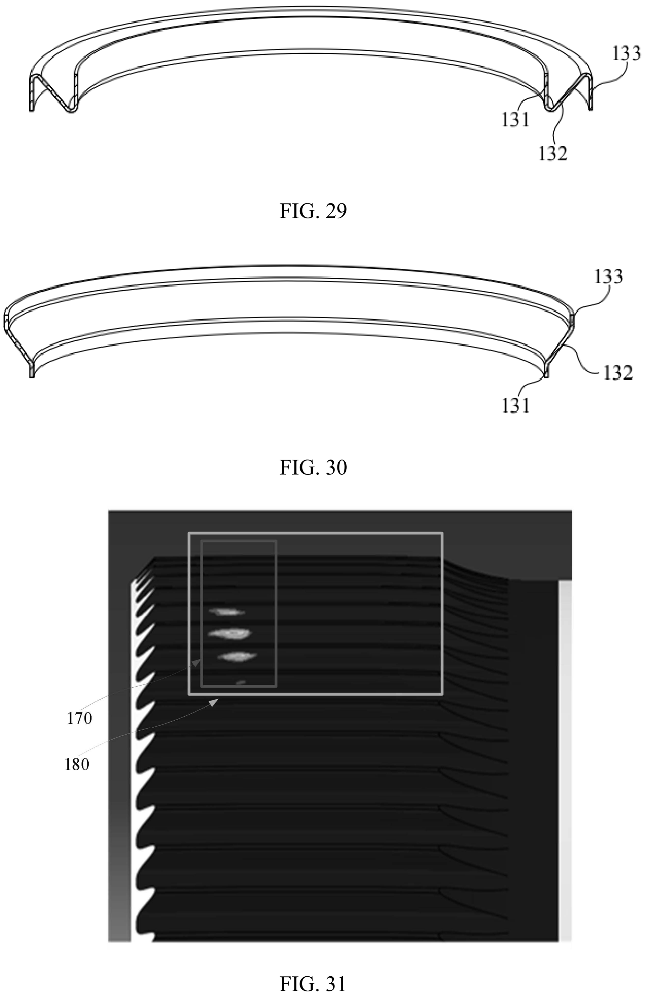

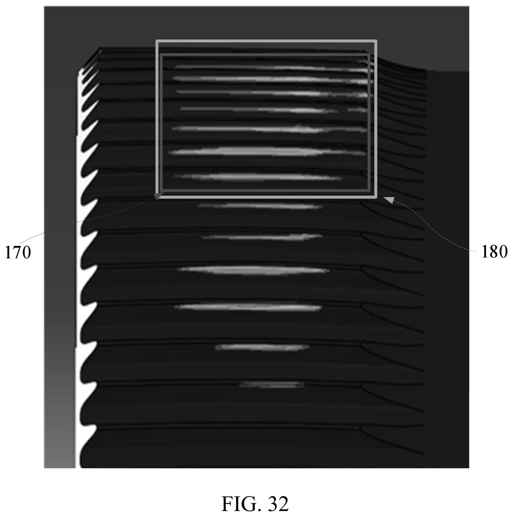

Referring to FIGS. 31 and 32, the indicated area in FIG. 31 is an actual engagement length interval 170 of a conventional harmonic reducer and a theoretical engagement length interval 180 of the conventional harmonic reducer. The indicated area in FIG. 32 shows the actual engagement length interval 170 of a novel harmonic reducer and a theoretical engagement length interval 180 of the novel harmonic reducer. Based on the comparison of the simulation figures, the actual engagement length interval 170 of the novel harmonic reducer is greater than the actual engagement length interval 170 of the conventional harmonic reducer. Compared with the conventional harmonic reducer, the engagement length of the flexible gear and the rigid gear is increased by the novel harmonic reducer, allowing them to engage with each other for the full tooth length, thereby improving the torque transmission capacity and transmission efficiency of the novel harmonic reducer. The engagement length of the flexible gear 140 and the rigid gear 150 can be increased by the novel harmonic reducer under various loads.

The torque output portion 147 of the flexible gear 140 is joined to the input connection portion 131 of the torque transmission member 130 by means including, but not limited to, welding, stickup, interference fit, splined connection, pressure contact, and/or insert molding, where the welding includes, but is not limited to, laser welding, friction welding, resistance welding, electromagnetic induction welding, and brazing welding.

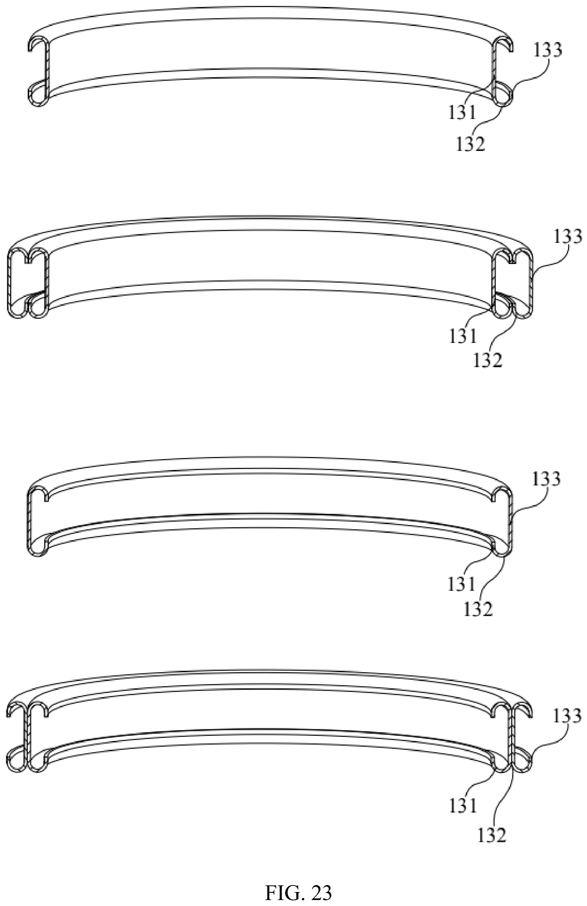

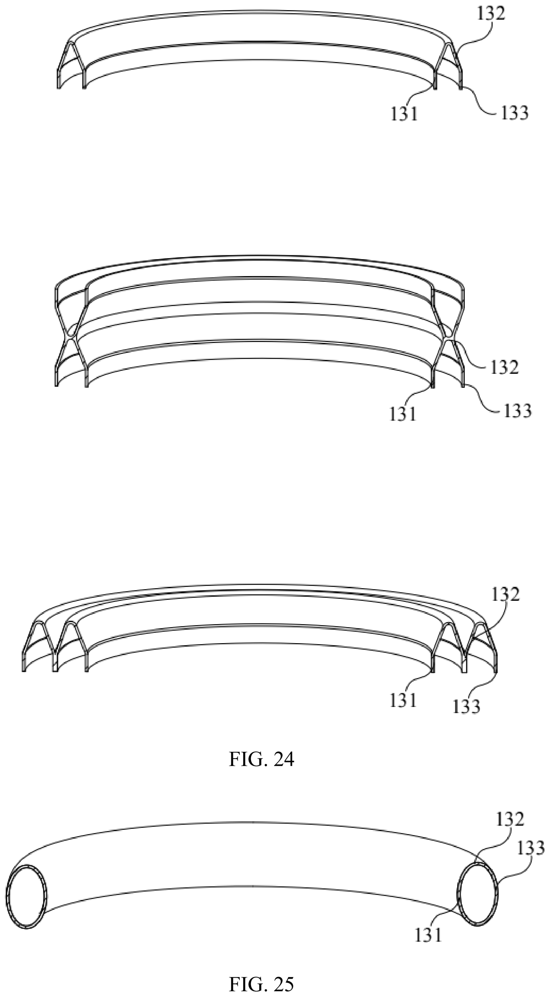

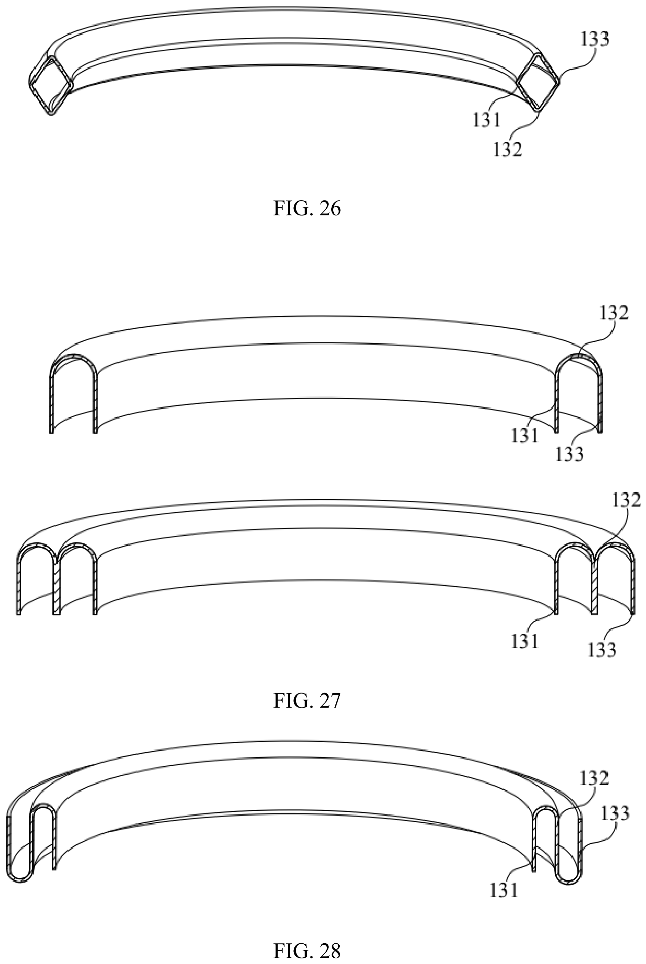

Referring to FIGS. 23-30, the cross-section of the deformable elastic portion 132 may be in a shape including, but not limited to, a straight plate shape, a U-shape, an S-shape, a V-shape, an N-shape, a C-shape, and/or an O-shape, the cross-section of the deformable elastic portion 132 may include at least one turn in the axial direction, and/or the cross-section of the deformable elastic portion 132 may include at least one layer in the radial direction, and/or the deformable elastic portion 132 may be a one-piece hoop or a complete hoop combined by a plurality of arcs in a circumferential direction.

The cross-section of the torque transmission member 130 may be a combination of the above-mentioned forms, or the torque transmission members 130 with the same cross-section may be used in combination by multiple turns and multiple layers, or formed as a complete round structure composed of multiple arcs in the circumferential direction.

The torque transmission member 130 may be made of, but not limited to, an alloy spring steel, a high-carbon spring steel, a stainless-steel spring steel, a copper alloy, an aluminum alloy, a carbon fiber material, and/or a resin material, and the torque transmission member 130 may be made of a material that can be processed to have an elastically deformable structure.

Referring to FIGS. 1-6, the flexible bearing 120 of the wave generator 100 includes four main components, namely an outer ring 124, an inner ring 125, a rolling element 121 and a retainer 126, where the rolling element 121 can be a pin roller or pin rollers 123. The axial section of the flexible gear 140 of the wave generator 100 in a conventional harmonic reducer is deformed into a conical structure when deforming due to the non-uniform deformation degree of the flexible gear 140 in the axial direction when deforming. Therefore, when the pin roller 123 is used as the rolling element 121 in the flexible bearing 120 of the conventional harmonic reducer, the flexible gear 140 is easily damaged, whereas the torque transmission member 130 of the flexible gear 140 in the novel harmonic reducer according to the present application is provided with the deformable elastic portion 132, such that the overall deformation degree of the flexible gear 140 is uniform when being deformed. In addition, by means of the pin roller 123 as the rolling element 121 of the flexible bearing 120, the supporting effect of the flexible bearing 120 on the flexible gear 140 may be improved, and loss of the flexible gear 140 during deformation may be reduced, thereby prolonging the service life of the flexible gear 140.

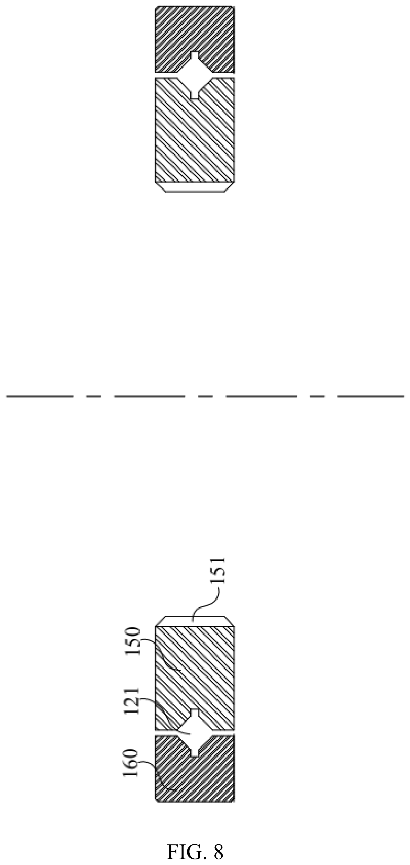

Referring to FIG. 8, the novel harmonic reducer further includes a bearing comprising the rigid gear 150, the fixed connector 160, and the rolling element 121 between the rigid gear 150 and the fixed connector 160.

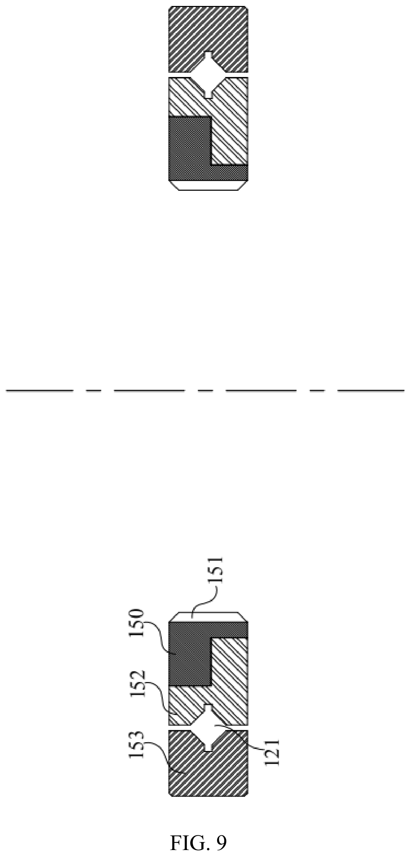

Alternatively, as shown in FIG. 9, the bearing comprises a first collar 152 connected to the rigid gear 150, a rolling element 121 and a second collar 153 connected to a fixed connector 160.

The present application also provides a flexible gear assembly comprising two components, namely a flexible gear 140 and a torque transmission member 130, where the flexible gear 140 is inserted between a rigid gear 150 and the wave generator 100 and has an external gear, and the flexible gear 140 is configured to be non-circularized by the wave generator 100 in order to be partially engaged with the rigid gear 150.

The torque transmission member 130 is joined with an outer peripheral wall or an inner circumferential wall of the flexible gear 140 in a radial direction of the flexible gear 140. A first leg of the torque transmission member 130 is connected with the flexible gear 140 to receive a torque, while a second leg of the torque transmission member 130 is configured to be connected with the fixed connector 160 to transmit the torque. The torque transmission member 130 is easily radially deformed together with the flexible gear 140 and may be configured to transmit the torque output from the flexible gear 140 due to the deformable elastic portion 132.

The torque transmission member 130 is made of an alloy spring steel, a high-carbon spring steel, a stainless-steel spring steel, a copper alloy, a carbon fiber material, an aluminum alloy and/or a resin material and has elasticity, and the torque transmission member 130 is connected with the flexible gear 140 by means of welding, stickup, interference fit, pressure contact and/or insert molding.

The present application also provides a robot that employs the novel harmonic reducer as described above.

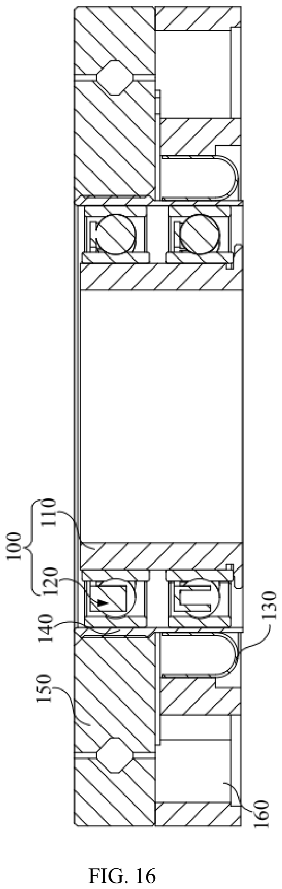

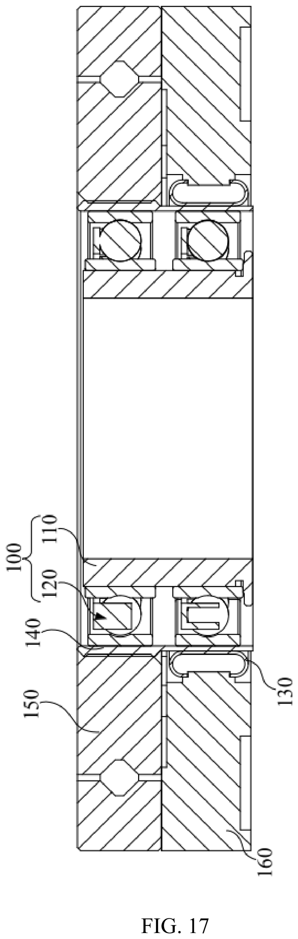

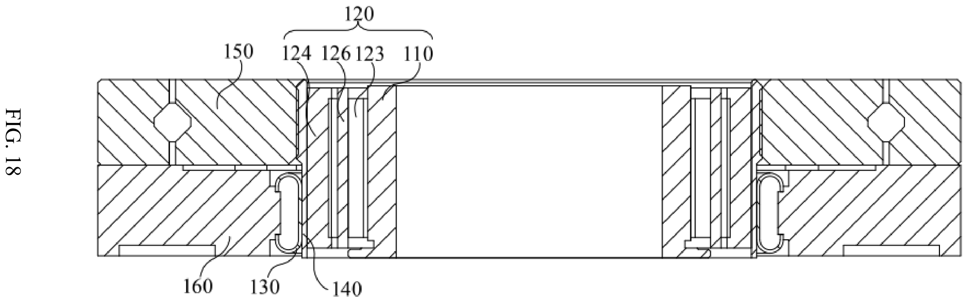

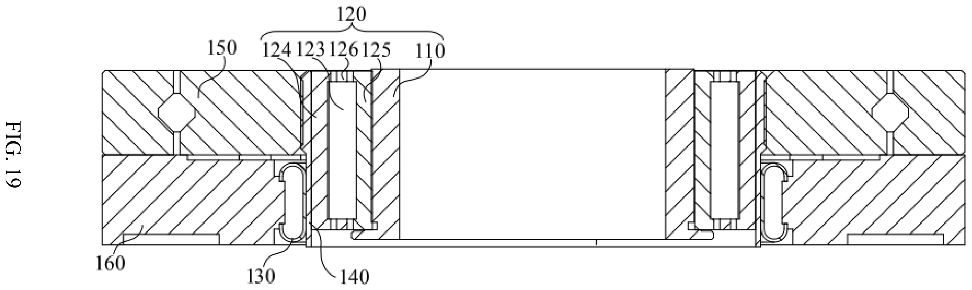

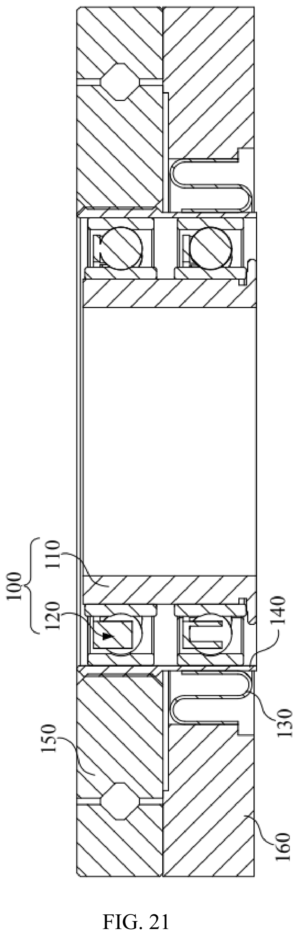

Specific Embodiment 1: referring to FIGS. 16, 17, 18, 19, and 21, the flexible gear 140 is elastically deformed by the rotation of the wave generator 100 in the novel harmonic reducer, and the flexible gear 140 transmits the torque outwards via the torque transmission member 130 and the staggered teeth of the flexible gear 140 and the rigid gear 150. The wave generator 100 includes a cam 110 and a flexible bearing 120, where the flexible bearing 120 may also be a quill bearing, a pin roller 123 bearing or a flexible deep groove ball bearing. The flexible gear 140 is deformed by the contact between the flexible bearing 120 and the flexible gear 140 when the cam 110 rotates. One end of the flexible gear 140 provided with an external gear is in staggered tooth engagement with the rigid gear 150 to transmit a torque to the rigid gear 150. In the present embodiment, the inner sidewall of the radial cross bearing is provided with an internal gear to use the radial cross bearing directly as the rigid gear 150. The torque transmission member 130 is connected to the outer sidewall of the flexible gear 140 at one end away from the external gear. The fixed connector 160 may also be designed as a torque sensor for measuring the torque output by the torque transmission member 130, and the fixed connector 160 is provided on one side of the bearing and connected with the torque transmission member 130. The cross-section of the deformable elastic portion 132 of the torque transmission member 130 may be in shapes including but not limited to a straight plate-shape, a U-shape, an S-shape, a V-shape, an N-shape, a C-shape and/or an O-shape, and may also be used in multi-layer in an axial or a radial direction. The flexible gear 140 is separated from the torque transmission member 130, so as to reduce the axial height of the novel harmonic reducer as a whole and to reduce the weight of the novel harmonic reducer while maintaining the safety and service life of the flexible gear 140 of the novel harmonic reducer during the rotation and deformation, thereby improving the transmission efficiency of the novel harmonic reducer.

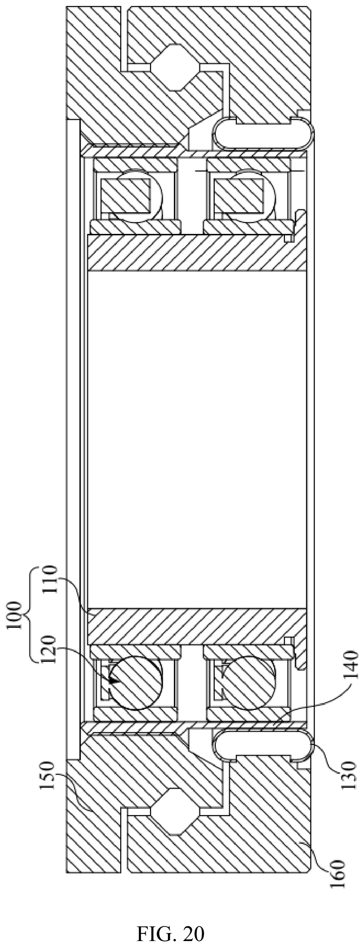

Specific Embodiment 2: referring to FIG. 20, the flexible gear 140 is elastically deformed by the rotation of the wave generator 100 in the novel harmonic reducer, and the flexible gear 140 transmits the torque outwards via the torque transmission member 130 and the staggered teeth of the flexible gear 140 and the rigid gear 150. The wave generator 100 includes a cam 110 and a flexible bearing 120, where the flexible bearing 120 can also be a quill bearing, a pin roller 123 bearing or a flexible deep groove ball bearing. The flexible gear 140 is deformed by the contact between the flexible bearing 120 and the flexible gear 140 when the cam 110 rotates. One end of the flexible gear 140, which is provided with an external gear is in staggered tooth engagement with the rigid gear 150 to transmit a torque to the rigid gear 150. In the present embodiment, the inner sidewall of the radial cross bearing is provided with an internal gear to use the radial cross bearing directly as the rigid gear 150. The torque transmission member 130 is connected to the outer sidewall of the flexible gear 140 at one end away from the external gear. The fixed connector 160 may also be designed as a torque sensor for measuring the torque output by the torque transmission member 130, and the fixed connector 160 is integrally formed with the axial cross bearing and connected to one side of the torque transmission member 130. The cross-section of the deformable elastic portion 132 of the torque transmission member 130 may be in shapes including but not limited to a straight plate-shape, a U-shape, an S-shape, a V-shape, an N-shape, a C-shape and/or an O-shape, and may also be used in multi-layer in an axial or a radial direction. The flexible gear 140 is separated from the torque transmission member 130, thereby reducing the axial height of the novel harmonic reducer as a whole while maintaining the safety and service life of the flexible gear 140 of the novel harmonic reducer during rotation and deformation. The fixed connector 160 is integrally formed with the axial cross bearing, which further reduces the entire axial dimension of the novel harmonic reducer and the weight thereof, thereby improving the transmission efficiency of the novel harmonic reducer.

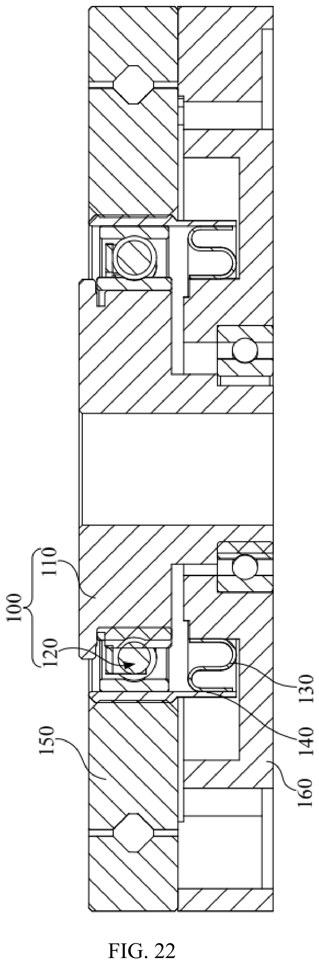

Specific Embodiment 3: referring to FIG. 22, the flexible gear 140 is elastically deformed by the rotation of the wave generator 100 in the novel harmonic reducer, and the flexible gear 140 transmits the torque outwards via the torque transmission member 130 and the staggered teeth of the flexible gear 140 and the rigid gear 150. The wave generator 100 includes a cam 110 and a flexible deep groove ball bearing. The flexible gear 140 is deformed by the contact between the flexible bearing 120 and the flexible gear 140 when the cam 110 rotates. One end of the flexible gear 140 provided with an external gear is in staggered tooth engagement with the rigid gear 150 to transmit a torque to the rigid gear 150. In the present embodiment, the inner sidewall of the radial cross bearing is provided with an internal gear to use the radial cross bearing directly as the rigid gear 150. The torque transmission member 130 is connected to the outer sidewall of the flexible gear 140 at one end away from the external gear. The fixed connector 160 is configured to measure the torque output by the torque transmission member 130. The fixed connector 160 is arranged at one side of the radial cross bearing and is sleeved on the flexible gear 140 to be connected to the torque transmission member 130. A rotary bearing is further provided between the fixed connector 160 and the cam 110 for improving the assembly stability of the fixed connector 160. The cross-section of the deformable elastic portion 132 of the torque transmission member 130 may be in shapes including but not limited to a straight plate-shape, a U-shape, an S-shape, a V-shape, an N-shape, a C-shape and/or an O-shape, and may also be used in multi-layer in an axial or a radial direction. The flexible gear 140 is separated from the torque transmission member 130, thereby reducing the axial height of the novel harmonic reducer as a whole and to reduce the weight of the novel harmonic reducer while maintaining the safety and service life of the flexible gear 140 of the novel harmonic reducer during the rotation and deformation, thereby improving the transmission efficiency of the novel harmonic reducer.

In summary, through the separated arrangement of the flexible gear 140 and the torque transmission member 130 in the novel harmonic reducer, the axial dimension of the flexible gear 140 may be reduced, thus reducing the axial dimension and weight of the novel harmonic reducer as a whole while maintaining the deformation safety and service life of the flexible gear 140 in the novel harmonic reducer, increasing the effective engagement length of the flexible gear 140 and the rigid gear 150, so as to be close to the full tooth length, thereby improving the torque transmission capacity of the novel harmonic reducer.

The above is the preferred embodiments of the present application, but it is not intended to limit the protection scope of the present application, and therefore, all equivalent variations in the structure, shape, and principles of this application fall within the protection scope of this application.

### List of Reference numerals

100 wave generator
110 cam
120 flexible bearing
121 rolling element
122 ball
123 pin roller
124 outer ring
125 inner ring
126 retainer
130 torque transmission member
131 input connection portion
132. deformable elastic portion
133 output connection portion
140 flexible gear
141 external tooth portion
142 wall portion of flexible gear
143 thin-walled flange
144 fixed flange
145 initial position of flexible gear wall
146 annular external gear
147 torque output portion
150 rigid gear
151 annular internal gear
152 first collar
153 second collar
160 fixed connector
170 actual engagement length interval
180 theoretical engagement length interval

## Claims

1. A novel harmonic reducer, **characterized in that** the novel harmonic reducer comprises four components, namely a rigid gear (150), a flexible gear (140), a wave generator (100) and a torque transmission member (130), wherein
the rigid gear (150) has an annular internal gear (151) along the inner circumferential surface of the rigid gear,
the wave generator (100) comprises a cam (110) with N protrusions rotatable around an axis and a flexible bearing (120) configured to be joined with an outer peripheral surface of the cam (110), a rolling element (121) of the flexible bearing (120) is designed as a ball (122), a quill roller or a pin roller (123), wherein the N of the N protrusions is an integer ≥ 2, and the wave generator (100) is inserted in the rigid gear (150),
the flexible gear (140) has an annular external gear (146) along an outer peripheral surface of the flexible gear, a number of teeth of the annular external gear (146) is less than a number of teeth of the annular internal gear (151), the flexible gear (140) has a torque output portion (147) adjacent to the annular external gear (146) in an axial direction, the flexible gear (140) is inserted between the rigid gear (150) and the wave generator (100), an inner circumference of the flexible gear (140) is deformed in cooperation with an outer periphery of the wave generator (100) such that the external gear of the flexible gear (140) is partially engaged with the internal gear of the rigid gear (150), and
the torque transmission member (130) extends along a circumferential direction of an inner circumference or an outer periphery of the torque output portion (147) around the axis, the torque transmission member (130) comprises an input connection portion (131), a deformable elastic portion (132) and an output connection portion (133), wherein the input connection portion (131) is joined with an outer peripheral surface or an inner circumferential surface of the torque output portion (147) to receive a torque, and the output connection portion (133) is configured to be connected with a fixed connector (160) to transmit the torque.

2. The novel harmonic reducer according to claim 1, **characterized in that** the torque output portion (147) of the flexible gear (140) is joined with the input connection portion (131) of the torque transmission member (130) in a manner comprising, but not limited to, welding, stickup, interference fit, splined connection, pressure contact, and/or insertion molding.

3. The novel harmonic reducer according to claim 2, **characterized in that** the welding comprises, but is not limited to, laser welding, friction welding, resistance welding, electromagnetic induction welding, and brazing welding.

4. The novel harmonic reducer according to claim 1, **characterized in that** the deformable elastic portion (132) can have a cross-section comprising, but not limited to, a straight plate shape, a U-shape, an S-shape, a V-shape, an N-shape, a C-shape, and/or an O-shape,
at least one turn of the deformable elastic portion (132) in an axial direction is provided; and/or
at least one layer of the cross-section of the deformable elastic portion (132) in a radial direction is provided; and/or
the deformable elastic portion (132) is a one-piece hoop or a complete hoop formed by a plurality of arcs in a circumferential direction.

5. The novel harmonic reducer according to claim 1, **characterized in that** the torque transmission member (130) may be made of, but not limited to, an alloy spring steel, a high-carbon spring steel, a stainless-steel spring steel, a copper alloy, an aluminum alloy, a carbon fiber material, and/or a resin material.

6. The novel harmonic reducer according to claim 1, **characterized in that** the flexible bearing (120) of the wave generator (100) comprises four main components, namely an outer ring (124), an inner ring (125), the rolling element (121) and a retainer (126).

7. The novel harmonic reducer according to claim 1, **characterized in that** the novel harmonic reducer further comprises a bearing comprising the rigid gear (150), the fixed connector (160) and the rolling element (121) between the rigid gear (150) and the fixed connector (160), or
the bearing comprises a first collar (152), the rolling element (121) and a second collar (153) , the first collar (152) is connected with the rigid gear (150), and the second collar (153) is connected to the fixed connector (160).

8. A flexible gear assembly, **characterized in that** the flexible gear assembly comprises two components, namely a flexible gear (140) and a torque transmission member (130), wherein
the flexible gear (140) is configured to be inserted between a rigid gear (150) and a wave generator (100) and has an external gear, the flexible gear (140) is configured to be deformed by the wave generator (100), so as to be partially engaged with the rigid gear (150), and
the torque transmission member (130) is joined with an outer peripheral wall or an inner circumferential wall of the flexible gear (140) in a radial direction of the flexible gear (140), a first leg of the torque transmission member (130) is connected with the flexible gear (140) to receive a torque, and a second leg of the torque transmission member (130) is configured to be connected with a fixed connector (160) to transmit the torque.

9. The flexible gear assembly according to claim 8, **characterized in that** the torque transmission member (130) is made of an alloy spring steel, a high-carbon spring steel, a stainless-steel spring steel, a copper alloy, a carbon fiber material, an aluminum alloy and/or a resin material and has elasticity, and the torque transmission member (130) is connected with the flexible gear (140) by means of welding, stickup, interference fit, pressure contact and/or insertion molding.

10. A robot, **characterized in that** the robot adopts the novel harmonic reducer according to any one of claims 1 to 7.
